# EUROPÄISCHE PATENTSCHRIFT

(11) **EP 1 151 595 B1**
(45) Veröffentlichungstag und Bekanntmachung des Hinweises auf die Patenterteilung: **06.10.2004**
(21) Anmeldenummer: 00910513.1
(22) Anmeldetag: 01.02.2000
(51) Int. Cl.: H04M 1/725

(54) **TELEKOMMUNIKATIONSENDGERÄT MIT EXTERNEM VIBRATIONSALARM**
TELECOMMUNICATION TERMINAL WITH EXTERNAL VIBRATION ALARM
TERMINAL DE TELECOMMUNICATION AVEC ALARME PAR VIBRATION EXTERNE

(30) Priorität: 19.02.1999 DE 19907084
(43) Veröffentlichungstag der Anmeldung: 07.11.2001
(73) Patentinhaber: SIEMENS AKTIENGESELLSCHAFT, 80333 München (DE)
(72) Erfinder: WEISS, Alexander, D-13086 Berlin (DE)
(86) Internationale Anmeldenummer: PCT/DE2000/000302
(87) Internationale Veröffentlichungsnummer: WO 2000/049791

(56) Entgegenhaltungen:
- EP-A- 0 467 071
- EP-A- 0 746 131
- US-A- 5 635 897
- US-A- 5 787 168

## Beschreibung

Die Erfindung betrifft ein Telekommunikationsendgerät, insbesondere Mobiltelefon, umfassend eine akustische Alarmeinrichtung zur akustischen, von dem Telekommunikationsendgerät ausgehenden Anrufsignalisierung und eine externe, mittels Schnurloskommunikation mit dem Telekommunikationsendgerät verbundene Signalisierungsvorrichtung zur schnurlosen Anrufsignalisierung, wobei die akustische Alarmeinrichtung durch Aktivierung der externen Signalisierungsvorrichtung ausschaltbar ist.

In vielen Situationen, beispielsweise im Beisein einer Vielzahl von Mitmenschen, wird die akustische Anrufsignalisierung oder das Klingeln eines Mobiltelefons von einem Benutzer als störend empfunden. Um ein störendes Klingeln des Mobiltelefons zu vermeiden und gleichzeitig doch erreichbar zu sein, gibt es Mobiltelefone, die auf Vibrationsalarm umschaltbar sind, d. h. anstatt der akustischen Anrufsignalisierung vibriert das Mobiltelefon und signalisiert dem Angerufenen so einen Anruf. Dies funktioniert jedoch nur, wenn der Benutzer das Mobiltelefon spürbar am Körper trägt oder es im Blickfeld des Benutzers ist. Sobald das Mobiltelefon beispielsweise in der Tasche oder dem Mantel des Benutzers ist, nimmt dieser den Vibrationsalarm nicht wahr.

Ein weiteres Problem von Mobiltelefonen mit Vibrationsalarm liegt darin, daß die durch diesen ausgelösten Vibrationen eine Belastung für die elektronischen Schaltungen des Telefons zusätzlich zu den im Gebrauch ohnehin wirkenden Beanspruchungen darstellen.

Aus der EP 0 467 071 A2 ist ein Telekommunikationsendgerät der eingangs bezeichneten Art bekannt, bei welchem über einen gesonderten Schalter die an dem Telekommunikationsendgerät unmittelbar vorgesehene akustische Alarmeinrichtung ausgeschaltet werden kann und gleichzeitig eine Aktivierung einer externen Signalisierungsvorrichtung erzielt werden kann. Dadurch kann in bestimmten Situationen, in welchen eine akustische Anrufsignalisierung unerwünscht ist, beispielsweise während einer Besprechung oder in einem Restaurant, die akustische Anrufsignalisierung unterbunden werden und statt dessen eine Anrufsignalisierung mittels der externen Signalisierungsvorrichtung vorgenommen werden, beispielsweise eine Signalisierung in Form eines Vibrationsalarms. Bei diesem Telekommunikationsendgerät besteht jedoch das Problem, daß dann, wenn die externe Signalisierungsvorrichtung ausfällt, beispielsweise weil der sie versorgende Akku entladen ist oder weil die räumliche Distanz zwischen dem Telekommunikationsendgerät und der externen Signalisierungsvorrichtung für die bereitgestellte Sendeleistung zu groß ist, dem Benutzer ein an seinem Telekommunikationsendgerät eingehender Anruf weder durch die externe Signalisierungsvorrichtung noch durch die an dem Telekommunikationsendgerät vorgesehene akustische Alarmeinrichtung signalisiert wird. Der Benutzer ist somit nicht erreichbar.

Ferner ist es aus der US 5,636,897 bekannt, eine externe Signalisierungsvorrichtung so auszubilden, daß diese ein akustisches oder mechanisches Signal in Form eines Pieptons oder eines Vibrationssignals ausgibt, wenn sich der Benutzer mit der externen Signalisierungsvorrichtung über eine größere Distanz von dem Telekommunikationsendgerät entfernt, als durch die für eine Kommunikation zwischen externer Signalisierungsvorrichtung und Telekommunikationsendgerät bereitgestellte Sendeleistung überbrückt werden kann. Bei diesem Stand der Technik stellt sich der Nachteil ein, daß jedesmal dann, wenn sich der Benutzer um eine derartige Distanz von dem Telekommunikationsendgerät entfernt, die externe Signalisierungsvorrichtung ein entsprechendes Alarmsignal ausgibt, um anzuzeigen, daß keine Anrufsignalisierung mehr gewährleistet ist. Dies kann von dem Benutzer als störend empfunden werden.

Es ist demgegenüber Aufgabe der vorliegenden Erfindung, ein Telekommunikationsendgerät mit einer externen Signalisierungsvorrichtung bereitzustellen, bei welchem der Benutzer des Telekommunikationsendgeräts nicht durch die externe Signalisierungsvorrichtung unnötig gestört wird und welches auch bei fehlender Betriebsbereitschaft der externen Signalisierungsvorrichtung dem Benutzer einen eingehenden Anruf signalisiert.

Diese Aufgabe wird durch ein Telekommunikationsendgerät der eingangs bezeichneten Art gelöst, bei welchem die akustische Alarmeinrichtung automatisch aktiviert ist, wenn die externe Signalisierungsvorrichtung nicht betriebsbereit ist oder die räumliche Entfernung zwischen dem Telekommunikationsendgrerät und der externen signalisierungsvorrichtung einen bestimmten Wert übersteigt.

Die Signalisierungsvorrichtung, die nur einen Funkempfänger für kurze Distanzen, eine Vibrationseinrichtung und eine kleine Stromversorgungseinrichtung benötigte kann kompakte Abmessungen und ein geringes Gewicht aufweisen, so daß die Signalisierungsvorrichtung bequem am Körper getragen werden kann. Der Benutzer kann daher den Vibrationsalarm immer wahrnehmen. Ein weiterer Vorteil der Erfindung liegt darin, daß das Telekommunikationsendgerät selbst keine Vibrationen erfährt und die Belastung der empfindlichen Mobiltelefonelektronik somit verringert ist. Außerdem verringert sich die Belastung des Benutzers durch Hochfrequenzstrahlung, da nur die Signalisierungsvorrichtung und nicht das Endgerät selbst am Körper getragen werden muß. Die Schnurloskommunikation zwischen Endgerät bzw. Mobiltelefon und Signalisierungsvorrichtung erstreckt sich nur über Distanzen von wenigen Metern und erfordert daher nur sehr kleine Sendeleistungen, deren Strahlenbelastung unbedenklich ist.

Vorteilhafte Weiterbildungen der Erfindung sind in den Unteransprüchen beschrieben.

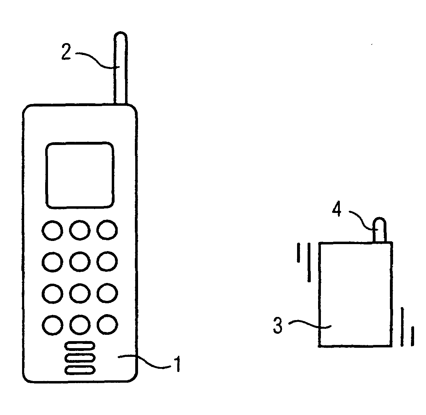

Die Erfindung wird im folgenden anhand eines bevorzugten Ausführungsbeispiels unter Bezugnahme auf die beiliegende Figur 1 im Detail erläutert, die schematisch eine erfindungsgemäßes Mobiltelefon mit externer Signalisierungsvorrichtung zeigt.

Das Telekommunikationsendgerät bzw. Mobiltelefon 1 weist eine Eingabetastatur, Display, Antenne 2, akustische Anrufsignalisierung usw. auf. Zusätzlich ist eine Sendeeinrichtung kleiner Leistung für die Schnurloskommunikation mit der externen tonlosen Signalisierungsvorrichtung 3 vorgesehen, die von dem Telefon 1 gesendete Signalisierungssignale mittels einer Antenne 4 empfängt. Die Signalisierungsvorrichtung 3 weist des weiteren eine Vibrationseinrichtung zur Erzeugung von Vibrationen oder eine Einrichtung zur Erzeugung eines optischen oder geruchlichen Anrufalarms auf. Vorzugsweise weist die signalisierungsvorrichtung 3 eine eigene Stromversorgung wie beispielsweise einen wiederaufladbaren Akku auf. Dadurch wird die Stromquelle des Mobiltelefons 1 entlastet und so dessen Betriebsdauer verlängert. Die Schnurloskommunikation zwischen Mobiltelefon und Signalisierungsvorrichtung erfolgt vorzugsweise per Funk. Alternativ kann diese jedoch auch auf andere Art und Weise, beispielsweise mittels Infrarot erfolgen.

Wenn das Mobiltelefon 1 einen Anruf empfängt, sendet es ein Signalisierungssignal an die Signalisierungsvorrichtung 3, die daraufhin den Vibrationsalarm (oder optischen Alarm) auslöst. Sobald der Benutzer des Mobiltelefons das Gespräch annimmt sendet dieses ein Signalisierungsendsignal an die Signalisierungsvorrichtung, die dann den Vibrationsalarm beendet.

Das Mobiltelefon 1 weist vorzugsweise eine herkömmliche akustische Signalisierungseinrichtung auf, wobei der Benutzer durch Umschalten zwischen akustischer Signalisierung durch das Mobiltelefon und tonloser Signalisierung durch die Signalisierungsvorrichtung 3 wählen kann. Gemäß einer bevorzugten Variante der Erfindung wird auch bei eingeschalteter tonloser Anrufsignalisierung die akustische Alarmeinrichtung automatisch aktiviert, wenn die Signalisierungsvorrichtung nicht betriebsbereit ist, beispielsweise der Akku leer ist oder die Funkverbindung zum Mobiltelefon unterbrochen ist, oder die räumliche Entfernung zwischen Telefon und Signalisierungsvorrichtung einen bestimmten Wert wie etwa 2 oder 3 Meter überschreitet und der Benutzer zu weit vom Mobiltelefon entfernt ist, um ein Gespräch entgegenzunehmen.

Gemäß einer anderen vorteilhaften Variante weist die Signalisierungsvorrichtung einen Sensor, beispielsweise Bewegungsoder Wärmesensor auf, durch den die Signalisierungsvorrichtung erfaßt, daß diese am Körper des Benutzers getragen wird und die Signalisierungsvorrichtung 3 so automatisch aktiviert und der akustische Alarm des Mobiltelefons ausgeschaltet wird.

Die Erfindung liefert ein Telekommunikationsendgerät, insbesondere ein Mobiltelefon mit einer externen, mittels Schnurloskommunikation mit dem Telefon verbundenen Signalisierungsvorrichtung zur tonlosen Anrufsignalisierung, die dem Benutzer den Vorteil einer einfachen Handhabung der tonlosen Anrufsignalisierung, beispielsweise durch Vibrationen bietet. Des weiteren ist die Belastung des Benutzers durch Hochfrequenzstrahlung deutlich geringer, als wenn dieser ständig das betriebsbereite Mobiltelefon am Körper tragen würde. Außerdem wird eine Belastung der empfindlichen Mobilfunkelektronik durch von einem Vibrationsalarm ausgelöste Erschütterungen vermieden.

## Patentansprüche

1. Telekommunikationsendgerät, insbesondere Mobiltelefon (1), umfassend eine akustische Alarmeinrichtung zur akustischen, von dem Telekommunikationsendgerät ausgehenden Anrufsignalisierung und eine externe, mittels Schnurloskommunikation mit dem Telekommunikationsendgerät (1) verbundene Signalisierungsvorrichtung (3) zur schnurlosen Anrufsignalisierung, wobei die akustische Alarmeinrichtung durch Aktivierung der externen Signalisierungsvorridhtung. (3) ausschaltbar ist,
**dadurch gekennzeichnet,**
**daß** die akustische Alarmeinrichtung automatisch aktiviert ist, wenn die externe Signalisierungsvorrichtung (3) nicht betriebsbereit ist oder die räumliche Entfernung zwischen dem Telekommunikationsendgerät (1) und der externen Signalisierungsvorrichtung (3) einen bestimmten Wert übersteigt.

2. Telekommunikationsendgerät nach Anspruch 1,
**dadurch gekennzeichnet,**
**daß** das Telekommunikationsendgerät (1) bei Eingang eines Anrufes ein Signalisierungssignal zur Aktivierung der tonlosen Anrufsignalisierung an die Signalisierungsvorrichtung (3) sendet und bei Gesprächsannahme durch einen Benutzer des Telekommunikationsendgerätes (1) ein Signalisierungsendsignal zur Deaktivierung der tonlosen Anrufsignalisierung an die Signalisierungsvorrichtung (3) sendet.

3. Telekommunikationsendgerät nach Anspruch 1 oder 2,
**dadurch gekennzeichnet,**
**daß** die Schnurloskommunikation zwischen Telekommunikationsendgerät (1) und Signalisierungsvorrichtung (3) per Funk oder per Infrarot erfolgt.

4. Telekommunikationsendgerät nach einem der Ansprüche 1 bis 3,
**dadurch gekennzeichnet,**
**daß** die Signalisierungsvorrichtung (3) ausgebildet ist, einen optischen, geruchlichen bzw. Vibrationsalarm auszugeben.

5. Telekommunikationsendgerät nach einem der Ansprüche 1 bis 4,
**dadurch gekennzeichnet,**
**daß** die Signalisierungsvorrichtung (3) eine eigene Stromversorgung aufweist.

6. Telekommunikationsendgerät nach einem der Ansprüche 1 bis 5,
**dadurch gekennzeichnet,**
**daß** die Signalisierungsvorrichtung (3) ausgebildet ist, am Körper des Benutzers getragen zu werden.

7. Telekommunikationsendgerät nach Anspruch 6,
**dadurch gekennzeichnet,**
**daß** die Signalisierungsvorrichtung (3) automatisch aktiviert und eine akustische Alarmeinrichtung des Telefons automatisch deaktiviert wird, wenn die Signalisierungsvorrichtung (3) am Körper des Benutzers getragen wird.

## Claims

1. Telecommunication terminal, in particular a mobile telephone (1), comprising an audible alarm device for the purpose of audible call signalling originating from the telecommunication terminal and an external signalling apparatus (3) connected to the telecommunication terminal (1) by means of cordless communication for the purpose of cordless call signalling, the audible alarm device being able to be turned off by activating the external signalling apparatus (3),
**characterized**
**in that** the audible alarm device is automatically activated if the external signalling apparatus (3) is not operational or the physical distance between the telecommunication terminal (1) and the external signalling apparatus (3) exceeds a particular value.

2. Telecommunication terminal according to Claim 1,
**characterized**
**in that**, upon receiving a call, the telecommunication terminal (1) sends a signalling signal for activating silent call signalling to the signalling apparatus (3) and, if the call is accepted by a user of the telecommunication terminal (1), sends a signalling end signal for deactivating silent call signalling to the signalling apparatus (3).

3. Telecommunication terminal according to Claim 1 or 2,
**characterized**
**in that** cordless communication between telecommunication terminal (1) and signalling apparatus (3) takes place by radio or by infrared.

4. Telecommunication terminal according to one of Claims 1 to 3,
**characterized**
**in that** the signalling apparatus (3) is designed to output a visual, odorous or vibrating alarm.

5. Telecommunication terminal according to one of Claims 1 to 4,
**characterized**
**in that** the signalling apparatus (3) has a dedicated power supply.

6. Telecommunication terminal according to one of Claims 1 to 5,
**characterized**
**in that** the signalling apparatus (3) is designed to be carried on the body of the user.

7. Telecommunication terminal according to Claim 6,
**characterized**
**in that** the signalling apparatus (3) is automatically activated and an audible alarm device of the telephone is automatically deactivated when the signalling apparatus (3) is being carried on the body of the user.

## Revendications

1. Terminal de télécommunication, notamment téléphone mobile (1), comprenant un dispositif d'alarme acoustique pour la signalisation d'appel acoustique à partir du terminal de télécommunication et un dispositif de signalisation externe (3) relié au terminal de télécommunication (1) par une communication sans fil et servant à la signalisation d'appel sans fil, le dispositif d'alarme acoustique pouvant être mis hors service par l'activation du dispositif de signalisation externe (3),
**caractérisé en ce que**
le dispositif d'alarme acoustique est activé automatiquement lorsque le dispositif de signalisation externe (3) n'est pas en état de fonctionner ou lorsque la distance spatiale entre le terminal de télécommunication (1) et le dispositif de signalisation externe (3) dépasse une valeur déterminée.

2. Terminal de télécommunication selon la revendication 1,
**caractérisé en ce que**
le terminal de télécommunication (1) envoie au dispositif de signalisation (3), lors de l'arrivée d'un appel, un signal de signalisation pour l'activation de la signalisation d'appel atonique et envoie au dispositif de signalisation (3), lorsqu'un utilisateur du terminal de télécommunication (1) prend l'appel, un signal de fin de signalisation pour désactiver la signalisation d'appel atonique.

3. Terminal de télécommunication selon la revendication 1 ou 2,
**caractérisé en ce que**
la communication sans fil entre le terminal de télécommunication (1) et le dispositif de signalisation (3) se fait par radio ou par infrarouge.

4. Terminal de télécommunication selon l'une des revendications 1 à 3,
**caractérisé en ce que**
le dispositif de signalisation (3) est exécuté de manière à émettre une alarme optique, olfactive resp. vibratoire.

5. Terminal de télécommunication selon l'une des revendications 1 à 4,
**caractérisé en ce que**
le dispositif de signalisation (3) est pourvu de sa propre alimentation en courant.

6. Terminal de télécommunication selon l'une des revendications 1 à 5,
**caractérisé en ce que**
le dispositif de signalisation (3) est exécuté de manière à être porté sur le corps de l'utilisateur.

7. Terminal de télécommunication selon la revendication 6,
**caractérisé en ce que**
le dispositif de signalisation (3) est activé automatiquement et un dispositif d'alarme acoustique du téléphone est désactivé automatiquement lorsque le dispositif de signalisation (3) est porté sur le corps de l'utilisateur.
